# EUROPÄISCHE PATENTANMELDUNG

(11) **EP 4 421 541 A1**
(43) Veröffentlichungstag der Anmeldung: **28.08.2024**
(21) Anmeldenummer: 24159303.7
(22) Anmeldetag: 23.02.2024
(51) Int. Cl.: G02B 1/00, B01D 53/86, B01J 21/06, B01J 23/00, B01J 35/50, G02B 5/00

(54) **STRUKTURIERTES HALBLEITERBAUTEIL UND VERFAHREN ZUR HERSTELLUNG EINES STRUKTURIERTEN HALBLEITERBAUTEILS**

(30) Priorität: 23.02.2023 DE 102023104498
(71) Anmelder: AMO GmbH, 52074 Aachen (DE)
(72) Erfinder: Plachetka, Ulrich, 41199 Mönchengladbach (DE); Daskalova, Desislava, 52062 Aachen (DE); Ku, Benny, 52066 Aachen (DE); Ruhkopf, Jasper, 52074 Aachen (DE); Aguila Flores, Gonzalo, 52062 Aachen (DE); Lemme, Max Christian, 51069 Köln (DE)
(74) Vertreter: Patentanwälte Bauer Vorberg Kayser

(57) **Zusammenfassung**

Die vorliegende Erfindung betrifft ein strukturiertes Halbleiterbauteil (1), aufweisend eine Halbleiterschicht (2), und eine strukturierte Schicht (3), die an die Halbleiterschicht (2) angrenzt, und die plasmonische Nanostrukturelemente (4) aufweist.

Um die multifunktionale Einsatzfähigkeit eines solchen strukturierten Halbleiterbauteil (1) zu erhöhen, wird vorgeschlagen, dass die Halbleiterschicht (2) ein katalytisch, insbesondere photo-katalytisch, aktives Material aufweist, und dass die plasmonischen Nanostrukturelemente (4) in einem sich periodisch wiederholenden Muster (M) angeordnet sind.

Ferner wird ein umweltfreundlicheres Verfahren zur Herstellung eines solchen Halbleiterbauteils vorgeschlagen.

## Beschreibung

Die vorliegende Erfindung betrifft ein strukturiertes Halbleiterbauteil, aufweisend eine Substratschicht, eine Halbleiterschicht, und eine strukturierte Schicht, die an die Halbleiterschicht angrenzt, wobei die strukturierte Schicht plasmonische Nanostrukturelemente aufweist.

Die nachfolgenden Ausführungen sind zur Einleitung in das vorliegende technische Gebiet der Nanoplasmonik angedacht. Diese Einleitung basiert auf Ausführungen im Review Artikel "The rich photonic world of plasmonic nanoparticle arrays" der Autoren Wang, Ramezani, Väkeväinen, Törmä, Rivas, Odom, erschienen in "materialstoday", Volume 21, Issue 3, April 2018, S. 303-314.

Wie dort ausgeführt, umfasst das Gebiet der Nanophotonik die Manipulation von Licht auf der Nanoskala und hat in den letzten zwei Jahrzehnten aufgrund von Fortschritten bei Materialien, Nanofabrikation und Modellierung einen Aufschwung erlebt. Insbesondere die Plasmonik, also die resonante Wechselwirkung von Licht mit leitfähigen Materialien, hat in jüngster Zeit aufgrund ihrer beispiellosen optischen Eigenschaften und einer breiten Palette von Anwendungen viel Aufmerksamkeit erregt. Seit den frühen Arbeiten von Michael Faraday über Gold-Nanokolloide und Glasfenster in mittelalterlichen Kirchen sind die eindrucksvollen Farben, die von "fein verteilten" Gold- und anderen Metall-Nanopartikeln erzeugt werden, von großem Interesse. Metallnanopartikel (NPs) weisen lokalisierte Oberflächenplasmonen (LSP) auf, kohärente Schwingungen freier Elektronen, deren optische Reaktion durch Größe, Form und Materialien der Nanostrukturen und angrenzenden Materialien angepasst werden kann. LSPs können zu großen lokalen elektromagnetischen Feldverstärkungen in tiefen Sub-Wellenlängen-Volumina führen. Wenn die NPs sehr nahe beieinander liegen, können ihre Nahfelder koppeln und die Felder weiter einschränken. Die Eigenschaften dieser sich fast berührenden NPs wurden in einem breiten Spektrum von Anwendungen genutzt, von der Spektroskopie bis hin zu Sensorik und Katalyse.

Im Vergleich zu einzelnen und kleinen Clustern von NPs können Metallpartikel, die in geordneten Arrays mit Abständen, die mit der Wellenlänge des Lichts vergleichbar sind, organisiert sind, sogar noch größere Feldverstärkungen und hochwertigere Resonanzen erzeugen, indem sie kurz- und langreichweitige Wechselwirkungen ausnutzen. Langreichweitige (strahlende) Kopplung zwischen LSPs einzelner NPs kann durch zwei Klassen von photonischen Moden vermittelt werden: Beugungsmoden in der Ebene des Arrays und geführte Moden in unterstützenden dielektrischen Platten. Für die Kopplung von Beugungsmoden ist eine gleichmäßige dielektrische Umgebung um die Metall-NP erforderlich, um Oberflächengitterresonanzen (SLRs, auch Gitterplasmonen genannt) zu erzeugen, während die Kopplung von geführten Moden Wellenleiterpolaritonen oder quasigeführte Moden erzeugt. Der Hauptgrund, warum SLRs an Bedeutung gewonnen haben, ist ihre Kombination aus wünschenswerten plasmonischen und photonischen Eigenschaften: hohe Feldverstärkungen, die für plasmonische Nanostrukturen charakteristisch sind, die sich übergroße Volumina erstrecken und eine lange Lebensdauer der photonischen Array-Struktur aufweisen. Alldielektrische NP-Arrays wurden kürzlich untersucht und weisen Eigenschaften auf, die die von SLRs ergänzen.

Bei den bisherigen Entwicklungen ist nachteilig, dass diese häufig nur für einen gezielten (einzigen) Einsatzbereich konzipiert wurden. Ferner werden mit Nanopartikeln strukturierte Oberflächen bisher in der Regel durch Adsorption von Nanopartikeln auf den zu strukturierenden Oberflächen gefertigt. Dabei werden Feststoffe (Pulver) häufig durch Einbrennen in Schichten umgewandelt. Bei solchen pulverbasierten Herstellungsverfahren ist nachteilig, dass Pulver leicht zerstäuben, migrieren und aufgrund ihrer Partikelgrößen und Materialcharakteristika Umwelt- und Gesundheitsrisiken mit sich bringen.

Basierend auf diesen Vorkenntnissen ist es eine Aufgabe der vorliegenden Erfindung, ein strukturiertes Halbleiterbauteil vorzuschlagen, welches multifunktional einsetzbar ist. Ferner ist es eine Aufgabe der vorliegenden Erfindung, ein umweltfreundlicheres und weniger gesundheitsgefährdendes Herstellungsverfahren für ein strukturiertes Halbleiterbauteil vorzugschlagen.

Gelöst wird diese Aufgabe mit einem strukturierten Halbleiterbauteil gemäß Anspruch 1 und einem Verfahren gemäß Anspruch 13.

Zunächst betrifft die vorliegende Erfindung ein strukturiertes Halbleiterbauteil, aufweisend
a. eine Halbleiterschicht, und
b. eine strukturierte Schicht, die an die Halbleiterschicht angrenzt, und die plasmonische Nanostrukturelemente aufweist.

Das strukturierte Halbleiterbauteil zeichnet sich dadurch aus, dass die Halbleiterschicht ein katalytisch, insbesondere photo-katalytisch, aktives Material aufweist, und dass die plasmonischen Nanostrukturelemente in einem sich periodisch wiederholenden Muster angeordnet sind. Mit der Anordnung der plasmonischen Nanostrukturelemente in einem periodischen Muster (synonym kann der Begriff "Struktur" für "Muster" verwendet werden) können gezielt verschiedene Effekte eingestellt werden, die bei statistisch verteilten Kolloiden und anderen Nanopartikeln nicht reproduzierbar umgesetzt werden können:
1. Das plasmonische Material ist überall gleich bzw. homogen verteilt, es liegen keine Dichteschwankungen der Strukturen über die Fläche vor;
2. Die Größenordnung der Nanostrukturelemente und der zugehörigen Muster wird eingestellt und reproduzierbar wiederholt, damit kann die Plasmonenresonanz exakt vorbestimmt werden;
3. Durch Anpassung des Tastverhältnisses der Strukturen können die Strukturen als Einzelantennen betrachtet und ausgelegt werden (kleines Tastverhältnis). Dann spielt die Strukturgröße die Hauptrolle bei den plasmonischen Effekten. Alternativ kann der Abstand zwischen den Strukturen klein gewählt werden (großes Tastverhältnis) und dominiert durch Feldkopplung zwischen den Strukturen die plasmonische Effekte.
4. In der Umgebung der Kontaktstelle zwischen Metall (der Nanostrukturelemente) und Halbleiterschicht wird durch die Plasmonik die Bandlückenlimitierung der Absorption des Halbleiters reduziert. Die Gesamtanordnung absorbiert mehr Licht. Durch die Herstellungsmethode der plasmonischen Nanostrukturelemente haben diese, anders als Kolloide, einen ganzflächigen Kontakt zur Halbleiterschicht;
5. Am Übergang zwischen Nanostrukturelementen (also Metall) und Halbleiterschicht entsteht eine Schottky-Barriere, die die Rekombination der Ladungsträger reduziert.
6. Durch die geordnete, periodische Anordnung der Nanostrukturelemente kann die Abschattung des Halbleiters exakt eingestellt werden.
7. Ein Metall (in Form der Nanostrukturelemente) auf der Oberfläche wird oft als Ko-Katalysator verwendet. Mit der periodischen Verteilung lässt sich dieser Effekt besser ausnutzen.

Durch die katalytischen, insbesondere photo-katalytischen Eigenschaften der Halbleiterschicht sowie die plasmonischen Eigenschaften der Nanostrukturelemente können katalytische, insbesondere photo-katalytische Eigenschaften mit durch die plasmonischen Nanostrukturelemente bereitgestellten vorteilhaften optischen Eigenschaften in einem gemeinsamen Bauteil verkörpert werden. Ein solches Bauteil kann beispielsweise in chemischen Katalyseverfahren eingesetzt werden, in denen zugleich eine optische Sensorik gewünscht ist. Dabei lässt sich die periodische Struktur (das Muster) beispielsweise gleichzeitig als Surface-Enhanced-Raman-Scattering-Struktur (SERS) verwenden und erlaubt die Inline-Kontrolle von katalytischen Vorgängen an der Oberfläche.

Die Halbleiterschicht ist - wie erwähnt - ein katalytisch, insbesondere auch photo-katalytisch aktives Material. Unter einer Photo-Katalyse kann verstanden werden, dass in Folge der Absorption von Photonen in einem Halbleiter Elektronen-Loch Paare erzeugt werden. Gelangen diese Ladungsträger an die Oberfläche des Halbleiters, können diese chemische Reaktionen an der Oberfläche auslösen.

Mittels der in einem sich periodisch wiederholenden Muster angeordneten plasmonischen Nanostrukturelemente kann beispielsweise eine gesteigerte Lichtabsorption durch das Halbleiterbauteil erreicht werden. Die plasmonischen Nanostrukturelemente ermöglichen eine Lichtabsorption von Licht mit unterhalb einer vorliegenden Bandlücke liegenden Energie. Halbleiter und plasmonische Struktur in Kombination sorgen für einen Ladungsträgeraustausch und ermöglichen damit, dass auch Licht, das im Halbleiter sonst nicht absorbiert werden würde, teilweise genutzt werden kann. Mit der Verwendung plasmonischer Nanostrukturelemente wird die Photoreaktivität der Halbleiterschicht deutlich erhöht. Je nach Auslegung der plasmonischen Nanostrukturelemente bzw. des zugehörigen Musters kann die Phtokatalyse im UV-Vis oder NIR-Bereich verbessert werden.

Ferner kann durch die in dem sich periodisch wiederholenden Muster angeordneten Nanostrukturelemente die Oberfläche des Bauteils vergrößert werden, was vorteilhaft beim Einsatz als Katalysator, insbesondere Photo-Katalysator sein kann. Die katalytisch aktive (zugängliche) Oberfläche wird damit vergrößert.

Ferner wird dadurch die Absorptionsoberfläche für einfallendes Licht vergrößert. Das sich periodisch wiederholende Muster kann ferner zur Bereitstellung bestimmter optischer Funktionen verwendet werden. Einstellparameter können die Periodenlänge, die Schichtdicke der Nanostrukturelemente, die Form der Nanostrukturelemente sowie die Abmessungen der Nanostrukturelemente sein.

Weitere Ausgestaltungen des vorgeschlagenen strukturierten Halbleiterbauteils sind in den Unteransprüchen sowie in der nachfolgenden Beschreibung angegeben. Nachfolgend seien die in den Unteransprüchen angegebenen Merkmale im Detail beschrieben. Ferner wird auf weitere mögliche Ausgestaltungen eingegangen. Die beschriebenen und in den Unteransprüchen angegebenen Ausgestaltungen und Merkmale können die Erfindung Kategorie-übergreifend spezifizieren. Dies bedeutet, dass jene Merkmale, die im Zusammenhang des vorgeschlagenen strukturierten Halbleiterbauteils beansprucht oder beschrieben sind, zugleich Ausgestaltungen oder Merkmale des vorgeschlagenen Verfahrens sein können und umgekehrt.

Nach einer ersten Ausgestaltung eines mit der Erfindung vorgeschlagenen strukturierten Halbleiterbauteils kann vorgesehen sein, dass die plasmonischen Nanostrukturelemente jeweils eine Scheibenform mit kreisförmiger oder elliptischer Kontur aufweisen. Die Bereitstellung von Nanostrukturelementen in Scheibenform mit kreisförmiger oder elliptischer Kontur lässt sich in hoher Formpräzision und geringer Fehlertoleranz fertigen. Die gleichmäßige Kreis- oder Ellipsenkontur stellt ein besonders günstiges Oberflächen-/Volumenverhältnis bereit, was sich vorteilhaft auf die Vergrößerung der Oberfläche auswirkt. Nanostrukturelemente in Scheibenform mit kreisförmiger oder elliptischer Kontur sind im Vergleich zu anderen Formen mechanisch stabiler.

Nach einer weiteren Ausgestaltung eines mit der Erfindung vorgeschlagenen strukturierten Halbleiterbauteils kann vorgesehen sein, dass die plasmonischen Nanostrukturelemente eine Stäbchenform, eine Rechteckform, eine Quadratform, eine Polygonform, eine Kreuzform, eine Drahtform oder eine unregelmäßige Form aufweisen, die beispielsweise dann polarisationsabhängiger wären. Die Nanostrukturelemente können grundsätzlich jedwede geeignete und für einen bestimmten Einsatzbereich des Bauteils erforderliche (günstige) Form aufweisen. Die genannte Liste ist nicht abschließend.

Nach einer weiteren Ausgestaltung eines mit der Erfindung vorgeschlagenen strukturierten Halbleiterbauteils kann vorgesehen sein, dass die Halbleiterschicht auf einer Substratschicht angeordnet ist. Die Substratschicht kann durch einen Substratkörper bereitgestellt werden, der beispielsweise auf Silizium basiert. Der Substratkörper kann als Halter/Träger fungieren. Bei dem Substrat kann es sich um einen Si- oder Glas-Wafer handeln. Die Halbleiterschicht kann grundsätzlich aus jedem Halbleitermaterial gebildet sein, solange diese eine Bandlücke aufweisen. Beispielsweise kann es sich bei dem Halbleitermaterial um Metalloxide, Nitride, Carbonverbindungen (g-C₃N₄), Übergangsmetall-Dichalkogenide (TMDs), MXENE etc. und deren Kombination handeln. Ebenso kann die Halbleiterschicht aus anderen der vorgenannten Halbleitermaterialien gebildet sein. Viele gängige Halbleitermaterialien wie z.B. TiOz und ZnO weisen verhältnismäßig große Bandlücken auf und absorbieren nur einen geringen Teil der solaren Strahlung. Die diesbezüglichen Bandlückenbeschränkungen bei der Absorption können durch den Einsatz des sich periodisch wiederholenden Musters der plasmonischen Nanostrukturelemente teilweise aufgehoben werden, was die Absorption von Licht erleichtert.

Nach einer weiteren Ausgestaltung eines mit der Erfindung vorgeschlagenen strukturierten Halbleiterbauteils kann vorgesehen sein, dass die plasmonischen Nanostrukturelemente in Bezug zur Halbleiterschicht erhaben sind. In diesem Fall ragt ein jeweiliges Nanostrukturelement ausgehend von einer Oberfläche der Halbleiterschicht von dieser Oberfläche weg. Dadurch wird die Bauteiloberfläche unmittelbar vergrößert. Eine in Bezug zu einer Oberfläche der Halbleiterschicht erhabene Anordnung der Nanostrukturelemente kann vorteilhafte optische Eigenschaften mit sich bringen. Dadurch kann beispielsweise gezielt eine Beugungsgitterstruktur oder eine optische Falle ausgebildet werden.

Nach einer weiteren Ausgestaltung eines mit der Erfindung vorgeschlagenen strukturierten Halbleiterbauteils kann vorgesehen sein, dass die plasmonischen Nanostrukturelemente in die Halbleiterschicht eingebettet sind. Eine Einbettung von Nanostrukturelementen in die Halbleiterschicht kann einen homogeneren Oberflächenaufbau und somit einen homogeneren dielektrischen Hintergrund bewirken, der stärkere Beugungskopplungen zischen den plasmonischen Teilchen ermöglicht, was letztlich zu einer starken Unterdrückung der Strahlungsdämpfung führen kann. Im Vergleich zu isolierten Nanostrukturelementen (Nanopartikeln) kann eine eingebettete Struktur von Nanostrukturelementen zu höheren Absorptionen oder Streuung führen.

Nach einer weiteren Ausgestaltung eines mit der Erfindung vorgeschlagenen strukturierten Halbleiterbauteils kann vorgesehen sein, dass das sich periodisch wiederholende Muster ausgebildet ist durch eine lineare, quadratische, rechteckige oder hexagonale Anordnung der plasmonischen Nanostrukturelemente. Bei einer linearen Anordnung wiederholt sich die Strukturinformation nur in x- oder y-Richtung (1D-Gitter, Linienstruktur). Unter einer quadratischen Anordnung der plasmonischen Nanostrukturelemente kann zu verstehen sein, dass vier plasmonische Nanostrukturelemente an den Eckpunkten eines gedachten Quadrats angeordnet sind (2D-Gitter). Die Eckpunkte können dabei jeweils mit einem jeweiligen Mittelpunkt eines jeweiligen plasmonischen Nanostrukturelements zusammenfallen. Unter einer rechteckigen Anordnung der plasmonischen Nanostrukturelemente kann zu verstehen sein, dass vier plasmonische Nanostrukturelemente an den Eckpunkten eines gedachten Rechtecks angeordnet sind. Die Eckpunkte können dabei jeweils mit einem jeweiligen Mittelpunkt eines jeweiligen plasmonischen Nanostrukturelements zusammenfallen. Unter einer hexagonalen Anordnung der plasmonischen Nanostrukturelemente kann zu verstehen sein, dass sechs plasmonische Nanostrukturelemente an den Eckpunkten, sowie im Mittelpunkt eines gedachten Hexagons angeordnet sind. Die Eckpunkte sowie der Mittelpunkt des Hexagons können dabei jeweils mit einem jeweiligen Mittelpunkt eines jeweiligen plasmonischen Nanostrukturelements zusammenfallen. Zur Bereitstellung der hexagonalen Anordnung der plasmonischen Nanostrukturelemente wiederholt sich die beschriebene Anordnung der Nanostrukturelemente (an den Eckpunkten und dem Mittelpunkt eines gedachten Hexagons) periodisch. Damit kann eine über die Halbleiterschicht ausgedehnte, sich periodisch wiederholende Anordnung von hexagonal angeordneten Nanostrukturelementen bereitgestellt werden.

Auch anderweitige, insbesondere polygonale, Anordnungen der plasmonischen Nanostrukturelemente sind denkbar.

Die plasmonischen Nanostrukturelemente können beispielsweise aus Gold, Silber, Platin, Palladium, Kupfer, Aluminium, Ruthenium, eine Mischung aus den aufgezählten Metallen, oder einer dotierten Halbleiterverbindung gebildet sein. Insbesondere Gold und Silber weisen vorteilhafte plasmonische Eigenschaften auf. Die plasmonischen Nanostrukturelemente können auch aus einer Legierung der vorangehend genannten oder anderweitigen leitfähigen Materialien gebildet sein.

Nach einer weiteren Ausgestaltung eines mit der Erfindung vorgeschlagenen strukturierten Halbleiterbauteils kann vorgesehen sein, dass die Halbleiterschicht ein elektrochemisch, insbesondere photo-elektrochemisch, aktives Material aufweist. Die Photo-Elektrochemie befasst sich mit Halbleiter-Elektrolyt Systemen bei Bestrahlung Licht. Der Halbleiter stellt dabei eine Elektrode dar, so auch die hier erwähnte Halbleiterschicht, die gemeinsam mit einem Elektrolyt eine Halbzelle bildet. Beim Einstrahlen von Licht bildet sich ein Elektronen-Loch-Paar, das in einer folgenden elektrochemischen Reaktion beteiligt ist. Das mit der Erfindung vorgeschlagene strukturierte Halbleiterbauteil kann somit als Elektrode in einer Halbzelle verwendet werden. Die Elektrodenoberfläche bildet dabei die Halbleiterschicht für sich genommen aus, oder aber die Halbleiterschicht gemeinsam mit der strukturierten Schicht, also gemeinsam mit den plasmonischen Nanostrukturelementen. Letztere bewirken dabei zugleich eine effizientere (leichtere) Ausbildung von Elektronen-Loch-Paaren bei Bestrahlung mit Licht bestimmter Wellenlängen.

Wie schon eingangs erwähnt können die plasmonischen Nanostrukturelemente eine insgesamt gesteigerte Lichtabsorption durch das Halbleiterbauteil bewirken. Die plasmonischen Nanostrukturelemente ermöglichen die Absorption von Licht mit einer Energie, die sogar unterhalb einer vorliegenden Bandlücke der Halbleiterschicht liegen kann. Modellhaft ausgedrückt bewirken die Nanostrukturelemente in Kontakt mit dem Halbleiter eine insgesamt höhere Absorption von Photonen auch mit Energien unterhalb der Bandlücke des Halbleiters, wobei generierte Ladungsträger zwischen den Materialien ausgetauscht werden können. Letztlich bildet die von den plasmonischen Nanostrukturelementen gebildete strukturierte Schicht einen Absorptionsverstärker bei der Absorption von Licht aus. Damit lassen sich auch in Bezug auf ihre Langlebigkeit der Photoaktivität vorteilhafte Halbleiter wie TiOz, ZnO, die zugleich aber eine relativ große Bandlücke aufweisen, zuverlässig zur Absorption von Licht einsetzen.

Nach einer weiteren Ausgestaltung eines mit der Erfindung vorgeschlagenen strukturierten Halbleiterbauteils kann vorgesehen sein, dass die strukturierte Schicht ein optisches Gitter, und/oder eine Nanoantennen-Struktur, und/oder einen Ko-Katalysator zur Halbleiterschicht, und/oder einen Ko-Photo-Katalysator zur Halbleiterschicht, und/oder einen Leiter, und/oder eine Materialtransportschicht, und/oder eine Elektrode ausbildet.

Wie erwähnt, kann die strukturierte Schicht ein optisches Gitter ausbilden. Ein optisches Gitter kann auch als Beugungsgitter bezeichnet werden. Die Nanostrukturelemente bilden dabei periodische Strukturen zur Beugung von Licht aus. Die durch die Nanostrukturelemente bereitgestellte Periode bestimmt die Gitterkonstante des optischen Gitters.

Weiterhin kann die strukturierte Schicht eine Nanoantennen-Struktur ausbilden, insbesondere eine Nanoantennen-Struktur, die aus plasmonischen Nanostrukturelementen gebildet ist. Die Nanoantennen-Struktur kann daher als plasmonische Nanoantennen-Struktur bezeichnet werden. Plasmonische Nanoantennen sind metallische Strukturen mit typischen Abmessungen die kleiner sind als die Wellenlänge des Lichtes (z. B. von einigen zehn oder hundert Nanometern bis einige Mikrometer), die es ermöglichen, die auf eine Oberfläche auftreffende optische Strahlung in sehr intensive, lokale Felder auf der Oberfläche selbst umzuwandeln. In den Nanostrukturelementen werden dabei die Elektronen zu kollektiven Schwingungen - den Plasmonen - angeregt, die wiederrum zu hohen Felderhöhungen an den Kanten einer Subwellenlängenstruktur führen können. In den Nanoantennen bilden sich stehende Wellen senkrecht zur Ausbreitungsrichtung des einfallenden Lichts aus; das evaneszente Feld ragt dabei über die physikalischen Grenzen der Struktur hinaus. Diese stehenden Wellen können als zwei Ladunqsträqerdichteoszillationen mit entgegengesetzter Richtung und sich daher aufhebenden Impulsen betrachtet werden. Auslöser für die stehende Welle ist das oszillierende elektrische Feld, dessen Frequenz durch Material und Geometrie der Nanoantenne bestimmt wird. Die genaue Geometrie ermöglicht eine diskrete Anzahl an möglichen Resonanzen.

Wie erwähnt, weist die Halbleiterschicht vorteilhafterweise katalytische oder photo-katalytische Eigenschaften auf. Die strukturierte Schicht, also die durch die plasmonischen Nanostrukturelemente gebildete Schicht, können ebenfalls eine katalytische oder photo-katalytische Aktivität aufweisen. Die katalytische oder photo-katalytische Aktivität der strukturierten Schicht bzw. der plasmonischen Nanostrukturelemente kann die katalytische der photo-katalytische Aktivität der Halbleiterschicht im Sinne eines Ko-Katalysators ergänzen. Dabei kann der Ko-Katalysator (z. B. Ko-Photo-Katalysator) die katalytische Aktivität die potentiell als Katalysator (bzw. Photo-Katalysator) agierende Halbleiterschicht katalytisch verstärken, z.B. indem der Ko-Katalysator denselben chemischen Prozess wie die Halbleiterschicht (zusätzlich) katalysiert. Ebenfalls kann der Ko-Katalysator einen anderweitigen chemischen Prozess katalysieren. Beispielsweise können damit parallel unterschiedliche chemische Reaktionen katalysiert werden.

Unter einem "Leiter", der von der strukturierten Schicht ausgebildet wird, kann ein elektrischer Leiter verstanden werden. Ein elektrischer Leiter ist zum Leiten von elektrischem Strom eingerichtet und basiert auf der elektrischen Leitfähigkeit der eingesetzten Materialien.

Wie erwähnt kann die Halbleiterschicht bzw. die strukturierte Schicht bei photoelektrochemischen Prozessen eingesetzt werden. Dabei bildet die strukturierte Schicht eine Elektrode aus. Dabei kann die strukturierte Schicht (also die Nanostrukturelemente) für sich genommen die Elektrode ausbilden, oder gemeinsam mit der Halbleiterschicht eine Elektrode ausbilden.

Die strukturierte Schicht kann aufgrund ihrer Struktur auch zur Leitung (insbesondere Strömungsleitung) von Materialien (Stoffen) eingesetzt werden. Je nach Muster und Anordnung der plasmonischen Nanostrukturelemente können von diesen Vorzugsströmungsflächen oder Kanäle definiert werden, entlang welcher ein Stoff (gerichtet) transportiert werden bzw. strömen kann. Insbesondere kann die strukturierte Schicht zur Leitung von Fluiden wie Gasen oder Flüssigkeiten eingesetzt werden. Über das periodische Muster der Nanostrukturelemente können beispielsweise auch Strömungsgeschwindigkeiten, Rückhalteraten, Turbulenzgrade etc. von Fluiden gezielt eingestellt werden.

Nach einer weiteren Ausgestaltung eines mit der Erfindung vorgeschlagenen strukturierten Halbleiterbauteils kann vorgesehen sein, dass die strukturierte Schicht mit einem Heteromaterial funktionalisiert oder um eine Heterostruktur erweitert ist, wobei mit dem Heteromaterial (TiOz/MoSz-Kombination) respektive der Heterostruktur optische oder katalytische Eigenschaften der strukturierten Schicht anpassbar sind. Unter einer Funktionalisierung mit einem Heteromaterial kann beispielsweise eine Beschichtung mit einem Heteromaterial verstanden werden, z. B. Graphen. Unter Funktionalisierung mit einem Heteromaterial kann aber ebenso zu verstehen sein, dass die Nanostrukturelemente ein Verbundmaterial aus Metall und einem Heteromaterial (z. B. Graphen) umfassen. Unter einer Funktionalisierung kann ferner verstanden werden, dass an die Oberfläche der strukturierten Schicht, also an die Nanostrukturelemente, Moleküle mit bestimmten Funktionen oder funktionellen Gruppen angebunden sind. Diese "funktionalen" Moleküle können beispielsweise gezielte katalytische oder chemische Eigenschaften aufweisen. Die Anbindung an die Oberfläche der strukturierten Schicht, also an die Nanostrukturelemente, kann über chemische Bindungen, koordinative Bindungen, chemische oder physikalische Wechselwirkungen erfolgen. Eine Erweiterung mit einer Heterostruktur kann beispielsweise eine Sub-Struktur meinen, d.h. die Nanostrukturelemente können jeweils strukturiert sein, d.h. eine eigene Strukturierung aufweisen. Die Nanostrukturelemente können dazu nach deren Anordnung auf der Halbleiterschicht strukturiert werden, z.B. durch Laserstrukturieren oder Ätzen (beispielsweise chemisches oder physikalisches Ätzen).

Wie erwähnt, wird die der vorliegenden Erfindung zugrunde liegende Aufgabe zudem durch ein Verfahren zur Herstellung eines strukturierten Halbleiterbauteils gelöst.

Das Verfahren umfasst die folgenden Schritte:
- Bereitstellen einer Halbleiterschicht aus einem katalytisch, insbesondere photo-katalytisch aktiven Material;
- Ausbilden einer strukturierten Schicht angrenzend zu der Halbleiterschicht, nämlich derart, dass plasmonische Nanostrukturelemente ausgebildet werden, die in einem sich periodisch wiederholenden Muster angeordnet sind.

Dabei kann die Halbleiterschicht auf einer Substratschicht (z. B. einem Si Substrat wie einem Si-Wafer) aufgebracht werden, insbesondere durch chemische oder physikalische Gasphasenabscheidung. Die Halbleiterschicht kann beispielsweise durch Magnetron Sputtern aufgebracht werden. Die Halbleiterschicht kann beispielsweise aus TiO₂, ZnO, CdS oder Fe₂O₃ gebildet werden. Substratschicht und Halbleiterschicht bilden vorzugsweise eine Dünnschicht, die flexibel sein kann. Es kann auch vorgesehen sein, dass auf eine Substratschicht verzichtet wird und lediglich eine Dünnschicht aus einem Halbleitermaterial vorgesehen wird. Eine angrenzende Anordnung der strukturierten Schicht zur Halbleiterschicht kann vorzugsweise meinen, dass die strukturierte Schicht in einem unmittelbaren Materialkontakt zur Halbleiterschicht steht. Die strukturierte Schicht ist durch plasmonische Nanostrukturelemente gebildet. Diese können auf der Halbleiterschicht angeordnet sein (grenzen somit an diese an), in die Halbleiterschicht eingebettet sein (grenzen somit ebenfalls an diese an), oder zwischen Substratschicht und Halbleiterschicht angeordnet sein (wobei die plasmonischen Nanostrukturelemente in einem Materialkontakt mit der Halbleiterschicht stehen).

Wie erwähnt, kann es vorteilhaft sein, die strukturierte Schicht auf der Halbleiterschicht auszubilden. Dies lässt sich verfahrenstechnisch einfach verwirklichen.

Nach einer weiteren Ausgestaltung eines mit der Erfindung vorgeschlagenen Verfahrens kann vorgesehen sein, dass die strukturierte Schicht ausgebildet wird durch die folgenden Schritte:
- Aufbringen eines Lacks auf die Halbleiterschicht, insbesondere eines Fotolacks, unter Ausbildung einer Maske;
- Einbringen eines Musters in die Maske, wobei das Muster zu dem sich periodisch wiederholenden Muster der plasmonischen Nanostrukturelemente korrespondiert, und wobei beim Einbringen des Musters im Bereich des eingebrachten Musters die Maske von dem Lack freigelegt wird und freigelegte Musterbereiche erzeugt werden;
- Aufbringen eines plasmonischen Materials in den freigelegten Musterbereichen;
- Entfernen der Maske, wodurch durch das in den freigelegten Musterbereichen aufgebrachte plasmonische Material gebildete plasmonische Nanostrukturelemente freigelegt werden.

Nach einer weiteren Ausgestaltung eines mit der Erfindung vorgeschlagenen Verfahrens kann vorgesehen sein, dass der Lack, insbesondere der Fotolack, mittels Spin-Coating (Rotationsbeschichtung) aufgebracht wird. Mit einem solchen Verfahren lässt sich der Lack besonders homogen und im industriellen Maßstab auf die Halbleiterschicht aufbringen.

Nach einer weiteren Ausgestaltung eines mit der Erfindung vorgeschlagenen Verfahrens kann vorgesehen sein, dass das Muster eingebracht wird durch
- Lithographie, oder
- Lithographie und einen sich daran anschließenden Ätzprozess, oder
- einen Ätzprozess.

Es sei betont, dass zur Einbringung des Musters grundsätzlich jedwedes geeignete lithographische Verfahren eingesetzt werden kann. Als Beispiele seien Nanoimprint-Lithographie, DUV (Deep Ultraviolett)-Lithographie, EUV (Extrem Ultraviolett)-Lithographie und (Multibeam)-Elektronenstrahl-Lithographie genannt.

Nach einer weiteren Ausgestaltung eines mit der Erfindung vorgeschlagenen Verfahrens kann vorgesehen sein, dass das plasmonische Material durch Elektronenstrahlverdampfen, Magnetron Sputtern oder Atomic Layer Deposition aufgebracht wird. Insbesondere Magnetron Sputtern zeigt sich als vorteilhaft.

Die vorliegende Erfindung wird durch die in den Figuren angegebenen Ausführungsbeispiele und Merkmale weiter spezifiziert. Die in den Figuren dargestellten Merkmale und Ausführungsbeispiele können vorteilhafte Ausgestaltungen des vorgeschlagenen Halbleiterbauteils sowie des vorgeschlagenen Verfahrens sein. In den Figuren zeigt:
- Fig. 1: eine schematische Perspektivdarstellung eines erfindungsgemäßen strukturierten Halbleiterbauteils;
- Fig. 2: eine schematische Querschnittsdarstellung eines Ausschnitts eines strukturierten Halbleiterbauteils nach Fig. 1;
- Fig. 3: eine schematische Darstellung eines plasmonischen Nanostrukturelements in Scheibenform mit kreisförmigen Kontur;
- Fig. 4: eine schematische Darstellung eines plasmonischen Nanostrukturelements in Scheibenform mit elliptischen Kontur;
- Fig. 5: eine schematische Darstellung eines plasmonischen Nanostrukturelements in Rechteckform;
- Fig. 6: eine schematische Darstellung eines plasmonischen Nanostrukturelements in Quadratform;
- Fig. 7: eine schematische Darstellung einer Anordnung von Nanostrukturelementen in Hexagon-Anordnung, wobei sich die Hexagon-Anordnung zur Ausbildung eines flächigen Musters periodisch wiederholt;
- Fig. 8 - 10: eine schematische Darstellung eines Verfahrensablaufs zur Herstellung eines strukturierten Halbleiterbauteils nach der Erfindung.

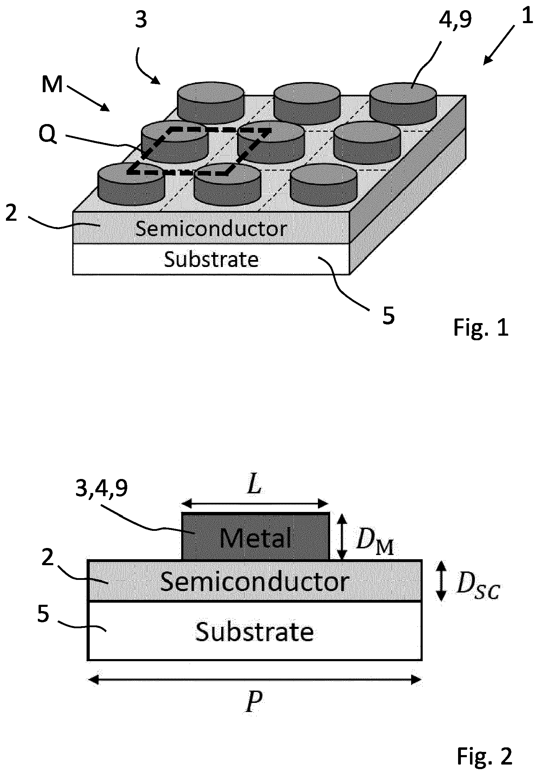

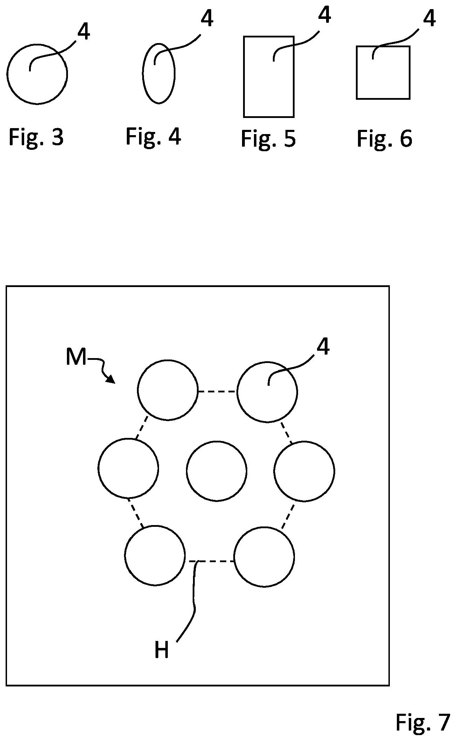

Figur 1 zeigt eine schematische Perspektivdarstellung eines erfindungsgemäßen strukturierten Halbleiterbauteils 1. Von unten nach oben ist das strukturierte Halbleiterbauteil 1 gebildet durch eine Substratschicht 5 (Substrate), eine darauf angeordnete Halbleiterschicht 2 (Semiconductor), sowie auf der Halbleiterschicht 2 angeordneten plasmonischen Nanostrukturelementen 4 aus einem plasmonischen Material 9. Die plasmonischen Nanostrukturelemente 4 sind beabstandet zueinander in einem (in der Darstellung nach Fig. 1) regelmäßigen Muster M angeordnet. Die plasmonischen Nanostrukturelemente 4 bilden eine strukturierte Schicht 3. Erkennbar grenzt die strukturierte Schicht 3 an die Halbleiterschicht 2 an. Die Nanostrukturelemente 4 weisen eine Scheibenform mit kreisförmiger Kontur auf. Dargestellt ist diese Form der Nanostrukturelemente 4 ebenfalls in Fig. 3. Die Halbleiterschicht 2 weist ein katalytisch, insbesondere photo-katalytisch, aktives Material auf. Wie in der Figur 7 gezeigt können die Nanostrukturelemente 4 auch in anderweitigen sich periodisch wiederholenden Mustern M angeordnet sein. Figur 7 zeigt beispielsweise in Hexagon-Form H angeordnete Nanostrukturelemente 4, wobei die Hexagon-Form H eine Struktureinheit bzw. Strukturzelle bildet. In Fig. 1 ist die Struktureinheit bzw. Strukturzelle jeweils durch Quadrat-Formen Q gebildet. Bei der Quadrat-Form Q ist an jeder Ecke eines gedachten Quadrats der Mittelpunkt eines plasmonischen Nanostrukturelements 4 angeordnet. Bei der in Figur 7 dargestellten Hexagon-Form H der Strukturzelle ist an jedem Eckpunkt sowie im Mittelpunkt des Hexagons der Mittelpunkt eines plasmonischen Nanostrukturelements 4 angeordnet. Zur Bereitstellung eines flächigen Musters der hexagonalen Anordnung (Hexagon-Form H) der plasmonischen Nanostrukturelemente 4 wiederholt sich die dargestellte Hexagon-Form H der Nanostrukturelemente 4 periodisch.

Figur 2 zeigt eine schematische Querschnittsdarstellung eines Ausschnitts eines strukturierten Halbleiterbauteils 1 nach Fig. 1. Insbesondere ist dort ein mit ein von einem Nanostrukturelement 4 besetzter Halbleiterbauteilausschnitt wiedergegeben. Der Halbleiterbauteilausschnitt weist eine Breite P auf. Die Schichtdicke der Halbleiterschicht 2 ist mit D_{SC} angegeben, während die Schichtdicke des plasmonischen Nanostrukturelements 4 mit D_{M} angegeben ist. Der Durchmesser des plasmonischen Nanostrukturelements 4 ist mit L bezeichnet..

Die Figuren 4 bis 6 zeigen weitere mögliche Formen (Konturen) von plasmonischen Nanostrukturelementen 4. So ist in Fig. 4 eine elliptische Kontur gezeigt, in Fig. 5 eine Rechteckform und in Fig. 6 eine Quadratform. Alternativ dazu können die Nanostrukturelemente 4 eine Polygonform, eine Kreuzform, eine Drahtform oder eine unregelmäßige Form aufweisen.

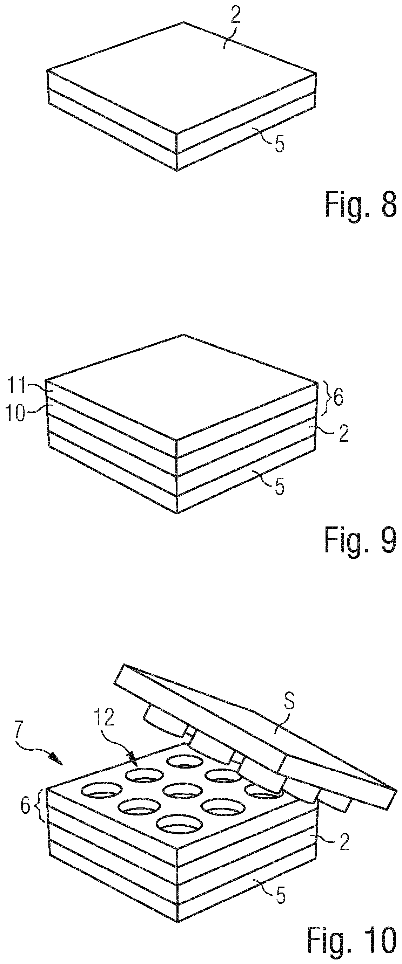

Die Figuren 8 bis 13 zeigen eine exemplarische Herstellungsroute für ein strukturiertes Halbleiterbauteil 1 mit plasmonischen Nanostrukturelementen 4 in Scheibenform und kreisförmiger Kontur, wobei die Nanostrukturelemente 4 auf einer Halbleiterschicht 2 angeordnet ist, die wiederrum auf einer Substratschicht 5 angeordnet ist.

Zunächst wird - wie in Fig. 8 dargestellt - die Halbleiterschicht 2 auf der Substratschicht 5 aufgebracht, beispielsweise durch chemische oder physikalische Gasphasenabscheidung. Beispielsweise kann das Verfahren des Magnetron Sputterns zum Aufbringen der Halbleiterschicht 2 auf der Substratschicht 5 verwendet werden. Bei der Substratschicht 5 handelt es sich um einen Si-Wafer. Die Substratschicht 5 und die Halbleiterschicht 2 bilden eine Dünnschicht.

In einem nächsten Schritt (Fig. 9) wird ein Lack 6 auf die Halbleiterschicht 2 aufgebracht, wobei es sich bei dem Lack 6 insbesondere um einen Fotolack handelt. Der Lack 6 ist aus einer Opferschicht 10 (nicht-plasmabeständig oder nicht-lösungmittelbeständig) und einer beständigeren Lithographieschicht 11, die sich für lithographische Prozesse eignet, gebildet, die gemeinsam eine Maske 7 ausbilden. Der Lack 6 kann mittels Spin-Coating aufgebracht werden.

Wie in Fig. 10 dargestellt, wird sodann mittels eines Stempels S ein Muster 12 in die Maske 7 eingebracht, wobei das Muster 12 zu dem sich periodisch wiederholenden Muster M der plasmonischen Nanostrukturelemente 4 korrespondiert. Die Einbringung des Musters 12 erfolgt durch Lithographie in die Lithographieschicht 11.

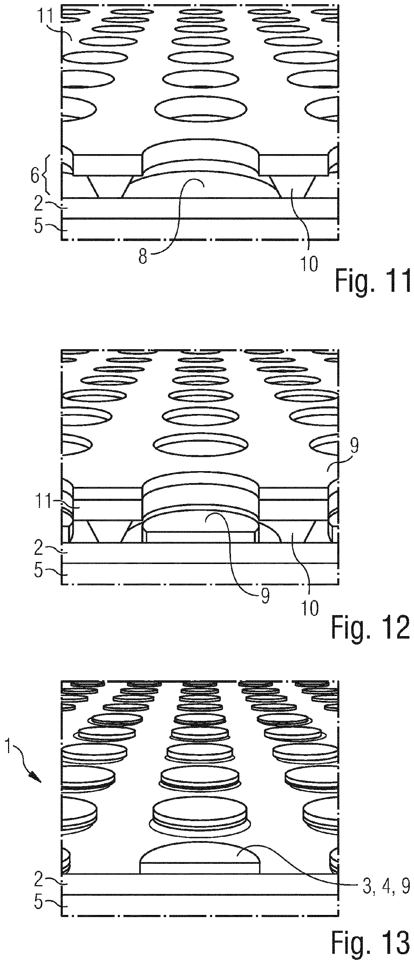

Sodann wird im Bereich des eingebrachten Musters 12 die Maske 7 von dem Lack 6 freigelegt, wodurch freigelegte Musterbereiche 8 erzeugt werden (Fig. 11). Die Freilegung erfolgt durch einen Ätzprozess, der vorzugsweise selektiv die freigelegten Musterbereiche 8 von dem Lack 6 freilegt.

Daraufhin (Fig. 12) wird das plasmonische Material 9 durch Elektronenstrahlverdampfen, Sputtern oder Atomic Layer Deposition in den freigelegten Musterbereichen 8 aufgebracht. Auch Teile der Amonil Schicht 11 werden dabei mit plasmonischen Material 9 beschichtet.

In einem letzten Schritt (Fig. 13) wird die Maske 7 (nunmehr die Schichtanordnung aus Opferschicht 10, Lithographieschicht 11 und einer darauf abgeschiedenen Schicht von plasmonischen Material 9) entfernt, wodurch nur das in den freigelegten Musterbereichen 8 aufgebrachte plasmonische Material 9, die eigentlichen plasmonischen Nanostrukturelemente 4, freigelegt werden.

### Hinweis auf Förderung

Das Projekt, welches zu dieser Anmeldung geführt hat, wurde mit Mitteln des Bundesministeriums für Wirtschaft und Klimaschutz aufgrund eines Beschlusses des Deutschen Bundestages (COSMOS, 49VF210041) gefördert.

### Bezugszeichenliste

- 1: strukturiertes Halbleiterbauteil
- 2: Halbleiterschicht
- 3: strukturierte Schicht
- 4: plasmonisches Nanostrukturelement
- 5: Substratschicht
- 6: Lack
- 7: Maske
- 8: freigelegter Musterbereich
- 9: plasmonisches Material
- 10: Opferschicht
- 11: Lithographieschicht
- 12: Muster
- L: Durchmesser
- D_{M}: Schichtdicke
- D_{SC}: Schichtdicke der Halbleiterschicht
- H: Hexagon-Form
- M: Muster
- P: Breite
- S: Stempel
- Q: Quadrat-Form

## Patentansprüche

1. Strukturiertes Halbleiterbauteil (1), aufweisend
a. eine Halbleiterschicht (2), und
b. eine strukturierte Schicht (3), die an die Halbleiterschicht (2) angrenzt, und die plasmonische Nanostrukturelemente (4) aufweist,
**dadurch gekennzeichnet, dass** die Halbleiterschicht (2) ein katalytisch, insbesondere photo-katalytisch, aktives Material aufweist, und dass die plasmonischen Nanostrukturelemente (4) in einem sich periodisch wiederholenden Muster (M) angeordnet sind.

2. Strukturiertes Halbleiterbauteil (1) nach einem der vorangehenden Ansprüche, **dadurch gekennzeichnet, dass** die plasmonischen Nanostrukturelemente (4) jeweils eine Scheibenform mit kreisförmiger oder elliptischer Kontur aufweisen.

3. Strukturiertes Halbleiterbauteil (1) nach Anspruch 1, **dadurch gekennzeichnet, dass** die plasmonischen Nanostrukturelemente (4) eine Stäbchenform, eine Rechteckform, eine Quadratform, eine Polygonform, eine Kreuzform, eine Drahtform oder eine unregelmäßige Form aufweisen.

4. Strukturiertes Halbleiterbauteil (1) nach einem der vorangehenden Ansprüche, **dadurch gekennzeichnet, dass** die Halbleiterschicht (2) auf einer Substratschicht (5) angeordnet ist.

5. Strukturiertes Halbleiterbauteil (1) nach einem der vorangehenden Ansprüche, **dadurch gekennzeichnet, dass** die plasmonischen Nanostrukturelemente (4) in Bezug zur Halbleiterschicht (2) erhaben sind.

6. Strukturiertes Halbleiterbauteil (1) nach einem der Ansprüche 1 bis 4, **dadurch gekennzeichnet, dass** die plasmonischen Nanostrukturelemente (4) in die Halbleiterschicht (2) eingebettet sind.

7. Strukturiertes Halbleiterbauteil (1) nach Anspruch 4, **dadurch gekennzeichnet, dass** die plasmonischen Nanostrukturelemente (4) zwischen der Halbleiterschicht (2) und der Substratschicht (5) angeordnet sind.

8. Strukturiertes Halbleiterbauteil (1) nach einem der vorangehenden Ansprüche, **dadurch gekennzeichnet, dass** das sich periodisch wiederholende Muster (M) ausgebildet ist durch eine lineare, quadratische, rechteckige oder hexagonale Anordnung der plasmonischen Nanostrukturelemente (4).

9. Strukturiertes Halbleiterbauteil (1) nach einem der vorangehenden Ansprüche, **dadurch gekennzeichnet, dass** die Halbleiterschicht (2) ein elektrochemisch, insbesondere photo-elektrochemisch, aktives Material aufweist.

10. Strukturiertes Halbleiterbauteil (1) nach einem der vorangehenden Ansprüche, **dadurch gekennzeichnet, dass** die strukturierte Schicht (3) einen Absorptionsverstärker bei der Absorption von Licht ausbildet.

11. Strukturiertes Halbleiterbauteil (1) nach einem der vorangehenden Ansprüche, **dadurch gekennzeichnet, dass** die strukturierte Schicht (3) ein optisches Gitter, und/oder eine Nanoantennen-Struktur, und/oder einen Ko-Katalysator zur Halbleiterschicht (2), und/oder einen Ko-Photo-Katalysator zur Halbleiterschicht (2), und/oder einen Leiter, und/oder eine Materialtransportschicht, und/oder eine Elektrode ausbildet.

12. Strukturiertes Halbleiterbauteil (1) nach einem der vorangehenden Ansprüche, **dadurch gekennzeichnet, dass** die strukturierte Schicht (3) mit einem Heteromaterial funktionalisiert oder um eine Heterostruktur erweitert ist, wobei mit dem Heteromaterial respektive der Heterostruktur optische oder katalytische Eigenschaften der strukturierten Schicht anpassbar sind.

13. Verfahren zur Herstellung eines strukturierten Halbleiterbauteils (1) nach einem der Ansprüche 1 bis 12, umfassend die folgenden Schritte:
- Bereitstellen einer Halbleiterschicht (2) aus einem katalytisch, insbesondere photo-katalytisch aktiven Material;
- Ausbilden einer strukturierten Schicht (3) angrenzend zu der Halbleiterschicht (2), nämlich derart, dass plasmonische Nanostrukturelemente (4) ausgebildet werden, die in einem sich periodisch wiederholenden Muster (M) angeordnet sind.

14. Verfahren nach Anspruch 13, **dadurch gekennzeichnet, dass** die Halbleiterschicht (2) auf einer Substratschicht (5) aufgebracht wird, insbesondere durch chemische oder physikalische Gasphasenabscheidung.

15. Verfahren nach Anspruch 13 oder 14, **dadurch gekennzeichnet, dass** die strukturierte Schicht (3) auf der Halbleiterschicht (2) ausgebildet wird.

16. Verfahren nach einem der Ansprüche 13 bis 15, **dadurch gekennzeichnet, dass** die strukturierte Schicht (3) ausgebildet wird durch die folgenden Schritte:
- Aufbringen eines Lacks (6) auf die Halbleiterschicht (2), insbesondere eines Fotolacks, unter Ausbildung einer Maske (7);
- Einbringen eines Musters (12) in die Maske (7), wobei das Muster (12) zu dem sich periodisch wiederholenden Muster (M) der plasmonischen Nanostrukturelemente (4) korrespondiert, und wobei beim Einbringen des Musters (12) im Bereich des eingebrachten Musters (12) die Maske (7) von dem Lack (6) freigelegt wird und freigelegte Musterbereiche (8) erzeugt werden;
- Aufbringen eines plasmonischen Materials (9) in den freigelegten Musterbereichen (8);
- Entfernen der Maske (7), wodurch durch das in den freigelegten Musterbereichen (8) aufgebrachte plasmonische Material (9) gebildete plasmonische Nanostrukturelemente (4) freigelegt werden.

17. Verfahren nach Anspruch 16, **dadurch gekennzeichnet, dass** der Lack (6), insbesondere der Fotolack, mittels Spin-Coating aufgebracht wird.

18. Verfahren nach Anspruch 16 oder 17, **dadurch gekennzeichnet, dass** das Muster (12) eingebracht wird durch
- Lithographie, oder
- Lithographie und einen sich daran anschließenden Ätzprozess, oder
- einen Ätzprozess.

19. Verfahren nach einem der Ansprüche 16 bis 18, **dadurch gekennzeichnet, dass** das plasmonische Material (9) durch Elektronenstrahlverdampfen, Magnetron Sputtern oder Atomic Layer Deposition aufgebracht wird.
